# EUROPEAN PATENT APPLICATION

(11) **EP 4 365 110 A1**
(43) Date of publication of application: **08.05.2024**
(21) Application number: 22854921.8
(22) Date of filing: 31.03.2022
(51) Int. Cl.: B65G 1/04, B65G 1/137

(54) **THREE-DIMENSIONAL SORTING METHOD, AND THREE-DIMENSIONAL SORTING ROBOT AND SYSTEM**

(30) Priority: 11.08.2021 CN 202110920773
(71) Applicant: Zhejiang Libiao Robotics Co., Ltd., Hangzhou, Zhejiang 311199 (CN)
(72) Inventor: XIA, Huiling, Hangzhou, Zhejiang 311199 (CN); ZHU, Jianqiang, Hangzhou, Zhejiang 311199 (CN); XU, Juejing, Hangzhou, Zhejiang 311199 (CN); MA, Ming, Hangzhou, Zhejiang 311199 (CN)
(74) Representative: Ottazzo, Marco Francesco Agostino
(86) International application number: PCT/CN2022/084621
(87) International publication number: WO 2023/015916

(57) **Abstract**

A three-dimensional sorting method, and a three-dimensional sorting robot and system. The method comprises: an obtaining step (S11): obtaining identity information of a target sorting storage rack, wherein the identity information may comprise structural data of the sorting storage rack and/or position information of a basket unit of the storage rack; a binding step (S12): binding the identity information of the target sorting storage rack to information of a three-dimensional sorting robot, and the binding relationship being associated with a target order by means of a server; and a sorting step (S13): under a sorting task of the target order, sorting, according to the identity information of the storage rack, goods to be sorted. In the three-dimensional sorting system, for different baskets or sorting racks, or for complicated and messy sorting racks, sorting can be completed by a sorting control method of recognizing information of different baskets or sorting racks, thereby implementing three-dimensional sorting that is not limited to baskets or sorting racks.

## Description

### Cross-reference to Related Applications

The present disclosure claims the priority to the Chinese patent application with the filling No. 202110920773.1 filed with the Chinese Patent Office on August 11, 2021, entitled "Three-dimensional Sorting Method, Three-dimensional Sorting Robot and System", the contents of which are incorporated herein by reference in entirety.

### Technical Field

The present disclosure relates to the technical field of sorting robot, and in particular relates to a three-dimensional sorting method, three-dimensional sorting robot and system.

### Background Art

A sorting robot is a robot provided with sensors and recognition mechanisms, which executes sorting actions for quickly sorting the goods.

The related sorting robots are classified as a platform sorting robot or a sorting robotic arm. In a distribution center, express packages are put on a conveyor belt from a bag and then conveyed to a location of a destination corresponding to a sorting bag, and put into the sorting bag at the destination through dropping down or grabbing from the conveyor belt. In this way, the sorting is completed.

The current sorting robot can complete a relatively efficient sorting after arranged. The sorting bags are needed to be arranged based on the standardization of plane and the location limitation, such that the more efficient sorting requirement cannot be met.

### Summary

Embodiments of the present disclosure provide a three-dimensional sorting method, three-dimensional sorting robot and system to realize a technical purpose of improving efficiency of sorting and space utilization of sorting.

A three-dimensional sorting method can include:
- an acquiring step, including acquiring identity information of a target sorting shelf, wherein the identity information can include: structure data of the sorting shelf and/or positional information of a basket unit in the shelf;
- a binding step, including binding the identity information of the target sorting shelf to information of the three-dimensional sorting robot, wherein the binding relationship can be associated through a target order of a server; and
- a sorting step, including sorting the goods to be sorted according to the identity information of the shelf under a sorting task of the target order.

Optionally, the method can further include:
- acquiring attribute data of the basket unit of the sorting shelf, wherein the attribute data can include: one or a combination of more of dimensional data, volumetric data and type data; and
- matching the goods to be sorted in the target order according to the attribute data, and generating a correspondence relationship table of the goods to be sorted and the basket unit.

Optionally, the acquiring step further includes:
- acquiring the identity information through reading a label provided on the target sorting shelf by radio frequency identification (RFID), wherein the label can carry the structure data of the sorting shelf and/or the positional information of the basket unit, wherein the structure data of the sorting shelf can refer to a longitudinal and transversal structure of the sorting shelf and positional information of an available basket unit; and
- the positional information of the basket unit can refer to a position of the basket unit in a coordinate system composed of the sorting shelf.

Optionally, the step of sorting the goods to be sorted in the following way according to the identity information of the shelf under the sorting task of the target order includes:
- parsing a sorting information of the goods to be sorted, wherein the sorting information can carry a correspondence relationship with a certain basket unit in the sorting shelf;
- looking up the correspondence relationship table, and acquiring a coordinate value of the basket unit in a three-dimensional coordinate system composed of the sorting shelf; and
- indexing the coordinate value and positioning, and putting the goods to be sorted into the basket unit.

Optionally, the method can further include:
- querying a sorting shelf number corresponding to the current goods to be sorted; and
- preparing to put into the sorting shelf when the sorting shelf number is consistent with the bound sorting shelf number.

Optionally, the method can further include:
- an order updating step, including:
   - updating the current order condition to be completed when all goods of the target order are put; and
   - releasing the binding relationship of the current shelf and the sorting robot.

Optionally, a plurality of sorting robots can be provided. During a period of executing the target order, the binding relationship of the sorting robot and the target sorting shelf can be sole.

A three-dimensional sorting robot can include:
- an acquiring unit, configured to acquire the identity information of the target sorting shelf, wherein the identity information can include: the structure data of the sorting shelf and/or the positional information of the basket unit in the sorting shelf;
- a binding unit, configured to bind the identity information of the target sorting shelf to the information of the three-dimensional sorting robot, wherein the binding relationship is associated through the target order of the server; and
- a sorting unit, configured to sort the goods to be sorted according to the identity information of the shelf under the sorting task of the target order.

Optionally, the acquiring unit can further be configured for:
- acquiring the attribute data of the basket unit of the sorting shelf, wherein the attribute data can include: one or a combination of more of the dimensional data, volumetric data and type data; and
- matching the goods to be sorted in the target order according to the attribute data, and generating the correspondence relationship table of the goods to be sorted and the basket unit.

Optionally, the acquiring unit can be realized by the RFID reader in the following way:
- acquiring the identity information through reading the label provided on the target sorting shelf, wherein the label can carry the structure data of the sorting shelf and/or the positional information of the basket unit, wherein the structure data of the sorting shelf can refer to a longitudinal and transversal structure of the sorting shelf and positional information of an available basket unit; and
- the positional information of the basket unit can refer to a position of the basket unit in a coordinate system composed of the sorting shelf.

Optionally, the sorting unit can further be configured for:
- parsing the sorting information of the goods to be sorted, wherein the sorting information can carry the correspondence relationship with certain basket unit in the sorting shelf;
- looking up the correspondence relationship table, and acquiring the coordinate value of the basket unit in the three-dimensional coordinate system composed of the sorting shelf; and
- indexing the coordinate value and positioning, and putting the goods to be sorted into the basket unit.

Optionally, the plurality of three-dimensional sorting robots can be provided. During the period of executing the target order by the sorting unit, the binding relationship of the three-dimensional sorting robot and the target sorting shelf is sole.

A three-dimensional sorting system can include: the sorting robot, the server and the sorting shelf, wherein the sorting robot can execute the following steps:
- the acquiring step, including acquiring identity information of the target sorting shelf, wherein the identity information can include: the structure data of the sorting shelf and/or the positional information of the basket unit in the shelf;
- the binding step, including binding the identity information of the target sorting shelf to the information of the sorting robot, wherein the binding relationship can be associated with the target order through executing by the server; and
- the sorting step, including sorting the goods to be sorted according to the identity information of the shelf under the sorting task of the target order.

Optionally, the sorting robot can execute the acquiring step in the following way:
- acquiring the identity information through reading the label provided on the target sorting shelf by the RFID, wherein the label can carry the structure data of the sorting shelf and/or the positional information of the basket unit, wherein the structure data of the sorting shelf can refer to a longitudinal and transversal structure of the sorting shelf and positional information of an available basket unit; and
- the positional information of the basket unit can refer to a position of the basket unit in a coordinate system composed of the sorting shelf.

Optionally, the three-dimensional sorting robot can execute the sorting step in the following way:
- parsing the sorting information of the goods to be sorted, wherein the sorting information can carry the correspondence relationship with certain basket unit in the sorting shelf;
- looking up the correspondence relationship table, and acquiring the coordinate value of the basket unit in the three-dimensional coordinate system composed of the sorting shelf; and
- indexing the coordinate value and positioning, and putting the goods to be sorted into the basket unit.

Optionally, the three-dimensional sorting robot can execute the sorting step in the following way:
- parsing the sorting information of the goods to be sorted, wherein the sorting information can carry the correspondence relationship with certain basket unit in the sorting shelf; looking up the correspondence relationship table, and acquiring the coordinate value of the basket unit in the three-dimensional coordinate system composed of the sorting shelf; and
- indexing the coordinate value and positioning, and putting the goods to be sorted into the basket unit.

Optionally, the server can execute the releasing and order updating steps, including:
- updating the current order condition to be completed when all goods of the target order are put; and
- releasing the binding relationship of the current shelf and the sorting robot.

A computing device can include:
- at least one processor; and
- a memory communicatively connected to the at least one processor, wherein the memory stores an instruction which can be executed by the at least one processor, and the instruction is executed by the at least one processor, so that the at least one processor can execute the foregoing method.

The three-dimensional sorting method, three-dimensional sorting robot and the system disclosed in the present disclosure acquire the identity information of the target sorting shelf; bind the identity information of the target sorting shelf to the information of the sorting robot, and make an association with the target order; and sort the goods to be sorted according to the identity information of the shelf under the sorting task of the target order. In the three-dimensional sorting system, in case of different baskets or sorting shelves, or sorting shelves with complex or messy structure, the sorting can be completed through the sorting control method by recognizing the information of different baskets or sorting shelves, so as to realize the three-dimensional sorting without limiting the baskets or sorting shelves.

### Brief Description of Drawings

The drawings illustrated herein are used to provide a further understanding of the present disclosure, which constitute a part of the present disclosure. The schematic embodiments of the present disclosure and illustrations thereof are used to explain the present disclosure, and do not constitute an undue limitation of the present disclosure. The drawings are as follows.
FIG. 1a shows a structure schematic diagram of the three-dimensional sorting system in the embodiments of the present disclosure;
FIG. 1b shows a flow schematic diagram of the three-dimensional sorting method in the embodiments of the present disclosure;
FIG. 1c shows a structure schematic diagram of the three-dimensional sorting shelf in the embodiments of the present disclosure;
FIG. 1d shows a structure schematic diagram of the three-dimensional sorting shelf in the embodiments of the present disclosure;
FIG. 2 shows a flow schematic diagram of the three-dimensional sorting method in the embodiments of the present disclosure;
FIG. 3 shows a flow schematic diagram of the three-dimensional sorting method in the embodiments of the present disclosure;
FIG. 4 shows a flow schematic diagram of the three-dimensional sorting method in the embodiments of the present disclosure;
FIG. 5 shows a flow schematic diagram of the three-dimensional sorting method in the embodiments of the present disclosure;
FIG. 6 shows a structure schematic diagram based on the three-dimensional sorting robot in the embodiments of the present disclosure;
FIG. 7 shows an execution flow schematic diagram of the three-dimensional sorting system in the embodiments of the present disclosure;
FIG. 8 shows a structure schematic diagram of the computing device in the embodiments of the present disclosure; and
FIG. 9 shows a structure schematic diagram of the readable medium in the embodiments of the present disclosure.

### Detailed Description of Embodiments

The embodiments of the present disclosure provide a three-dimensional sorting method, three-dimensional sorting robot and system to realize a technical purpose of improving sorting efficiency and space utilization of sorting.

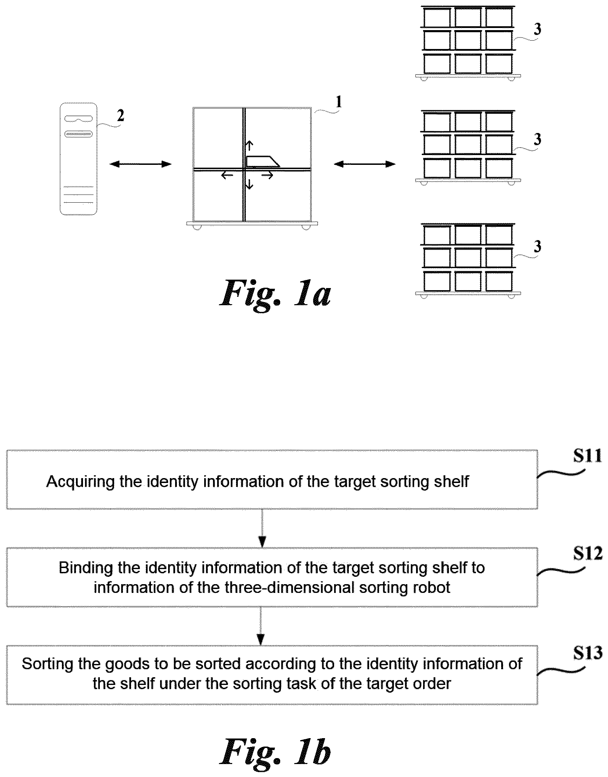

In conjunction with FIG. 1a, the three-dimensional sorting system in the embodiments of the present disclosure is illustrated below. In the present disclosure, the three-dimensional sorting system includes three-dimensional sorting robots 1, a server 2 and sorting shelves 3. As an optional embodiment, a plurality of three-dimensional sorting robots 1 are provided, and installed in a sorting field through an active way by a bus (e.g., CAN). The sorting shelf is in contact communication with the three-dimensional sorting robot by inserting and pulling out. Of course, the data exchange can also be completed in a wireless and contactless method, which is not limited herein. The sorting robot 1 can recognize and execute the sorting task by support frame, transverse movable mechanism and longitudinal movable mechanism for the sorting shelf with the three-dimensional multi-layer structure. At the same time, the sorting robot 1 can be provided with a turning plate 12 or a structure assembly of putting the goods into the sorting shelf, and can cooperate with a desktop sorting robot or a flat sorting robot to execute the sorting task based on a certain batch order. The server 2 is configured to control multiple three-dimensional sorting robots in sorting batches, sorting orders, and the local area network or area. At the same time, it achieves the binding relationship between the three-dimensional sorting robots and the sorting shelves, for the binding of a certain batch and a certain order.

Based on this, referring to FIG. 1b, the three-dimensional sorting method of the present disclosure includes the following steps.

Acquiring step S11: acquiring an identity information of a target sorting shelf, wherein the identity information can include: the structure data of the sorting shelf and/or positional information of a basket unit in the sorting shelf.

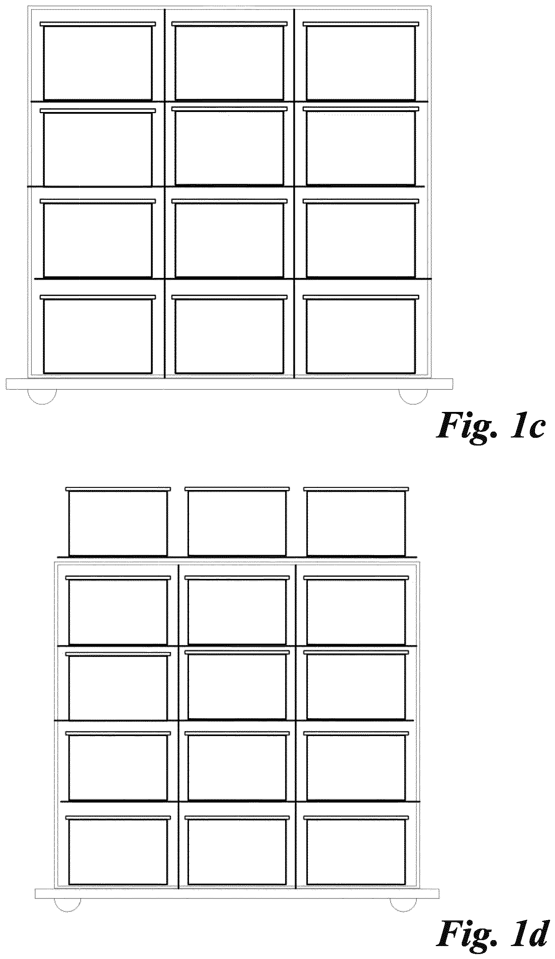

Referring to the illustration of FIG. 1c, in a three-dimensional sorting system, a plurality of sorting shelves is provided. For example, if the current target sorting shelf is labelled as 001, the identity information thereof includes at least a structure data of the sorting shelf. If a structure of shelf 001 includes 4 rows and 3 columns, and after recognized by the three-dimensional sorting robot, the goods to be sorted need to be put into the basket at the third row and the second column, the three-dimensional sorting robot puts the goods just according to the structure and the position. The structure data can also be distinguished by a type of the sorting shelf, e.g., type X001 refers to a rectangular sorting shelf including 4 rows and 3 columns, and type Y001 refers to a rectangular sorting shelf including 8 rows and 5 columns.

Binding step S12: binding the identity information of the target sorting shelf to information of the three-dimensional sorting robot, wherein the binding relationship is associated through the target order of a server.

It should be noted that, if a certain order A002 contains 10,000 sorting tasks, during the sorting process for the sorting tasks of the order A002, the three-dimensional sorting robot needs to be bound to the target sorting shelf 001 to complete an accurate sorting for goods.

In the system cooperatively controlled by the server and CAN bus, the binding relationship of the current shelf and the sorting robot is realized by inserting the current shelf into the sorting robot position.

In order to manage and collect data for the batch, order and a completion situation of the order at the server side, in the embodiment, the server needs to store the identity information for each of the sorting shelves or baskets, and store and update the relationship of the three-dimensional sorting robot, the order being executed and the bound sorting shelf or basket.

Sorting step S13: sorting the goods to be sorted according to the identity information of the shelf under the sorting task of the target order.

In the embodiment, the three-dimensional sorting robot needs to be controlled by the server according to the order and the sorting task to be completed. The sorting target of the three-dimensional sorting robot is the goods, and the target position is provided based on the identity information of the foregoing sorting shelves or the baskets.

Referring to FIG. 1d and in conjunction with FIG. 1c, in the present disclosure, the sorting shelf can be the sorting shelf or basket with any structure or shape. The conventional sorting shelf or basket will be configured according to different goods or different sorting lines, so that the structures of the sorting shelves often are not uniform, which are even spliced together by the plurality of shelves. In order to acquire more detailed information of the sorting shelf, the embodiment further includes the following steps.

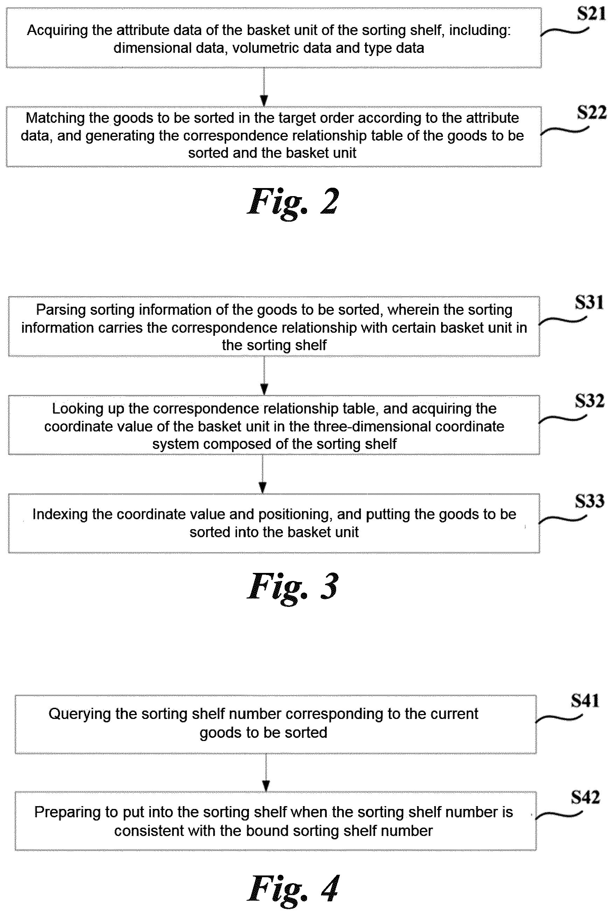

Referring to FIG. 2,
- S21: acquiring the attribute data of the basket unit of the sorting shelf, wherein the attribute data includes: one or a combination of more of the dimensional data, volumetric data and type data.

In order to allocate the baskets for a convenient, rapid and suitable sorting for the goods to be allocated, it is necessary to acquire the dimension, volume and type of each of the basket units to allocate the corresponding sorting task.

S22: matching the goods to be sorted in the target order according to the attribute data, and generating the correspondence relationship table of the goods to be sorted and the basket unit.

Each of the goods to be sorted has a correspondence relationship with one or more basket units based on the sorting task, and the sorting robot completes the accurate sorting based on the correspondence relationship.

For the acquiring step in FIG. 1, the identity information can be acquired through reading the label provided on the target sorting shelf by radio frequency identification (RFID), wherein the label can carry the structure data of the sorting shelf and/or the positional information of the basket unit.

Of course, the labeled card of the RFID configured to the target sorting shelf may only store an ID of the target sorting shelf, and the structure data thereof and/or the positional information of the basket unit can be stored in the server for acquiring by the three-dimensional sorting robot.

The structure data of the sorting shelf indicates a longitudinal and transversal structure of the sorting shelf and information of an available basket.

The positional information of the basket unit indicates a position of the basket unit in the coordinate system composed of the sorting shelf.

The foregoing form of reading the RFID is preferentially selected for configuring the movable sorting shelf in the three-dimensional sorting system. In order to complete the sorting efficiently, when a sorting robot 001 receives a sorting task of a certain order A002, 9 movable sorting shelves (X010-X090) are allocated to the sorting robot 001 to complete the order.

When the movable sorting shelf of type X001 is configured to sort, the sorting robot 001 reads that the target rectangular sorting shelf is of a type of X001 (the type X001 refers to a 4-row and 3-column rectangular sorting shelf) by reading the RFID label of the movable sorting shelf X010. It is obtained by reading that the target rectangular sorting shelf has 12 available baskets distributed in 4 rows and 3 columns. Since the target sorting shelf is divided based on the coordinate system, the 12 available baskets ban be noted respectively in such way: X1Y1(1,1) characterizes the basket at the first row and the first column, X1Y2(1,2) characterizes the basket at the first row and the second column, ..., until X4Y3(4,3) characterizes the basket at the fourth row and the third column.

It is noted particularly that, during the period of executing the target order A002, the binding relationship of the three-dimensional sorting robot and the target sorting shelf is sole, i.e., after the sorting robot 001 completes the sorting for the movable sorting shelf X010, the sorting is performed for the movable sorting shelf X020.

Referring to FIG. 3, the sorting step can be realized by the following method.

S31: parsing the sorting information of the goods to be sorted, wherein the sorting information carries the correspondence relationship with certain basket unit in the sorting shelf.

S32: looking up the correspondence relationship table, and acquiring the coordinate value of the basket unit in the three-dimensional coordinate system composed of the sorting shelf.

S33: indexing the coordinate value and positioning, and putting the goods to be sorted into the basket unit.

The foregoing steps can be executed based on the above FIG. 1- FIG. 2 and examples thereof. Of course, it is not limited to put the goods to be sorted through reading identity information by RFID and looking up the correspondence relationship table.

Referring to FIG. 4, it shows a flow of recognizing the sorting shelf in the present disclosure, including:
- S41: querying the sorting shelf number corresponding to the current goods to be sorted; and
- S42: preparing to put into the sorting shelf when the sorting shelf number is consistent with the bound sorting shelf number.

Before the sorting robot executes the sorting action shown in FIG. 3 and the corresponding description, the step in FIG. 4 is executed.

Following the above example, before the sorting robot 001 puts the certain goods to be sorted, it is necessary to confirm whether the sorting shelf or the sorting basket where the used basket is located is the bound one. If it is recognized that it is put into a wrong sorting shelf or wrong sorting basket, a second confirmation or a fault alarm is executed, so as to avoid the occurrence of putting errors.

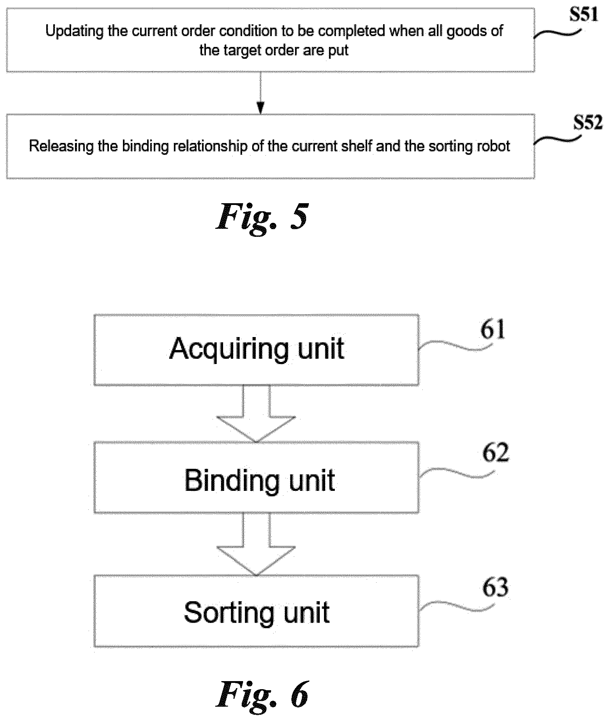

Referring to FIG. 5, it shows a flow of recognizing the sorting shelf in the present disclosure, including: an order updating step.

S51: updating the current order condition to be completed when all goods of the target order are put.

After the sorting robot 001 completes the putting task of order 002, the condition of order 002 is updated to be completed on the server side, and the other orders of this batch are to be executed.

S52: releasing the binding relationship of the current shelf and the sorting robot.

Optionally, in the system cooperatively controlled by the server and the CAN bus, the binding relationship of the current shelf and the sorting robot is realized by inserting the current shelf into the sorting robot position, and the binding relationship of the current shelf and the sorting robot is released by pulling out the current shelf from the sorting robot. It should be emphasized that this method is a preferred method.

In order to facilitate the order management, it is necessary to release the binding relationship of the sorting robot to the current shelf when the order 002 is completed. If the sorting task for the next order exists, the sorting robot will execute the steps and instructions shown in FIG. 1, which will not be repeated in the embodiment.

FIG. 6 shows a sorting robot, which includes the following units.

The acquiring unit 61 is configured to acquire the identity information of the target sorting shelf, wherein the identity information can include: the structure data of the sorting shelf and/or the positional information of the basket unit in the shelf.

The acquiring unit can be preferably realized by the RFID reader in the following way:
- acquiring the identity information through reading the label provided on the target sorting shelf, wherein the label can carry the structure data of the sorting shelf and/or the positional information of the basket unit, wherein the structure data of the sorting shelf refer to a longitudinal and transversal structure of the sorting shelf and information of an available basket unit; and
- the positional information of the basket unit refers to a position of the basket unit in a coordinate system composed of the sorting shelf.

Of course, it is not limited to this method of acquiring the identity information of the sorting shelf. The hardware solution corresponding to acquiring unit can be realized by multiple methods, such as remote reading, contact reading, visual recognition, etc.

The binding unit 62 is configured to bind the identity information of the target sorting shelf to the information of the sorting robot, wherein the binding relationship is associated through the target order of the server.

Optionally, in the system cooperatively controlled by the server and the CAN bus, the binding relationship of the current shelf and the sorting robot is realized by inserting the current shelf into the sorting robot position, and the binding relationship of the current shelf and the sorting robot is released by pulling out the current shelf from the sorting robot. It should be emphasized that this method is a preferred method.

The server can be provided by the computing device. In order to manage and collect data for the batch, order and a completion condition of the order at the server side, in the embodiment, the server needs to store the identity information for each of the sorting shelves or baskets, and store and update the relationship of the three-dimensional sorting robot, the order being executed and the bound sorting shelf or basket.

The sorting unit 63 is configured to sort the goods to be sorted according to the identity information of the shelf under the sorting task of the target order.

The sorting unit 63 is further configured for:
- parsing the sorting information of the goods to be sorted, wherein the sorting information carries the correspondence relationship with certain basket unit in the sorting shelf;
- looking up the correspondence relationship table, and acquiring the coordinate value of the basket unit in the three-dimensional coordinate system composed of the sorting shelf; and
- indexing the coordinate value and positioning, and putting the goods to be sorted into the basket unit.

The hardware device corresponding to the sorting unit can be selected as follows: the support frame, the transverse movable mechanism and the longitudinal movable mechanism for the sorting robot 1 can recognize and execute the sorting task for the sorting shelf with the three-dimensional multi-layer structure. At the same time, the sorting robot 1 can be provided with a turning plate or a structure assembly of putting the goods into the sorting shelf and can cooperate with a desktop sorting robot or a flat sorting robot to execute the sorting task based on a certain batch order.

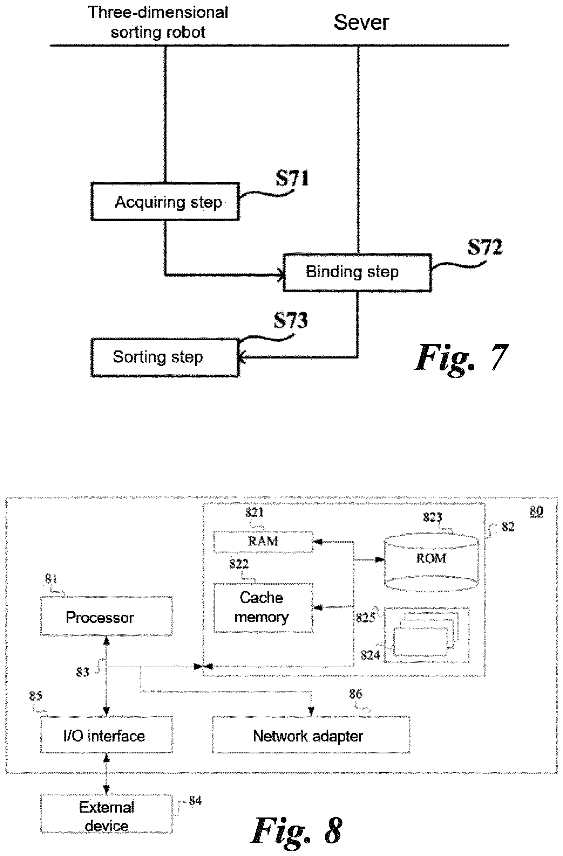

Referring to FIG. 7 and also referring to FIG. 1a, in the three-dimensional sorting system of embodiments of the present disclosure, the three-dimensional sorting system includes three-dimensional sorting robot, server and sorting shelf, wherein the sorting robot executes the following steps.

The acquiring step 71 includes acquiring the identity information of the target sorting shelf, wherein the identity information can include: the structure data of the sorting shelf and/or the positional information of the basket unit in the shelf.

The sorting robot executes the acquiring step in the following way:
- acquiring the identity information through reading the label provided on the target sorting shelf by the RFID, wherein the label can carry the structure data of the sorting shelf and/or the positional information of the basket unit, wherein the structure data of the sorting shelf refer to a longitudinal and transversal structure of the sorting shelf and information of an available basket; and
- the positional information of the basket unit refers to a position of the basket unit in a coordinate system composed of the sorting shelf.

The binding step 72 includes binding the identity information of the target sorting shelf to the information of the sorting robot, wherein the binding relationship is associated with the target order through executing by the server.

The sorting step 73 includes sorting the goods to be sorted according to the identity information of the shelf under the sorting task of the target order. The sorting robot executes the sorting step in the following way:
- parsing the sorting information of the goods to be sorted, wherein the sorting information carries the correspondence relationship with certain basket unit in the sorting shelf;
- looking up the correspondence relationship table, and acquiring the coordinate value of the basket unit in the three-dimensional coordinate system composed of the sorting shelf; and
- indexing the coordinate value and positioning, and putting the goods to be sorted into the basket unit.

The server 2 executes the releasing and order updating steps, including:
- updating the current order condition to be completed when all goods of the target order are put; and
- releasing the binding relationship of the current shelf and the sorting robot.

Optionally, in the system cooperatively controlled by the server and the CAN bus, the binding relationship of the current shelf and the sorting robot is realized by inserting the current shelf into the sorting robot position, and the binding relationship of the current shelf and the sorting robot is released by pulling out the current shelf from the sorting robot. It should be emphasized that this method is a preferred method.

FIG. 8 shows the computing device 80 matched with the method in FIGS. 1 to 5.

It should be noted that, the computing device 80 shown in FIG. 8 is only an example, which should not bring any limitation to the function and the scope of use of the embodiments of the present disclosure.

As shown in FIG. 8, the server is represented in form of a general-purpose computing device 80. The components of the computing device 80 can include, but are not limited to: the at least one processor 81 foregoing, the at least one memory 82 foregoing and the bus 83 connecting different system components (including the memory 82 and the processor 81).

The bus 83 represents one or more of several types of bus structures, which includes the memory bus or memory-controller bus, peripheral bus, processor bus or local area bus using any one of the multiple bus structures.

The memory 82 can include a readable medium in form of volatile memory, such as random-access memory (RAM) 821 and/or cache memory 822, and can further optionally include a read-only memory (ROM) 823.

The memory 82 can further include a program/utility tool 825 with a group (at least one) of program modules 824. The program module 824 includes, but is not limited to: an operating system, one or more application programs, and other program module and program data, wherein each or certain combination of the examples can include the function of realizing the network environment.

The computing device 80 can also be in communication with one or more external devices 84 (e.g., keyboard, pointing device, etc.), and can also be in communication with one or more devices that enable the user can be interacted with the computing device 80, and/or can be in communication with any device (e.g., router, modem, etc.) that enables the computing device 80 to communicate with one or more other computing devices. The communication can be executed through an input/output (I/O) interface 85. Furthermore, the computing device 80 can further be in communication with one or more networks (e.g., a local area network (LAN), wide area network (WAN) and/or public network, such as the Internet) through a network adapter 88. As shown in the drawing, the network adapter 88 is in communication with other modules used for the computing device 80 through the bus 83. It should be understood that, although not shown in the drawing, other hardware and/or software module can be used in conjunction with the computing device 80, which includes but is not limited to: microcode, device driver, redundant processor, external disk driving array, RAID system, magnetic tape driver, and data backup storage system, etc.

In some possible embodiments, the computing device according to the present disclosure can include at least one processor and at least one memory (such as the first server). The memory stores program code, so that the processor executes the steps in the system privilege opening method according to various exemplary embodiments of the present disclosure described above in the specification when the program code is executed by the processor.

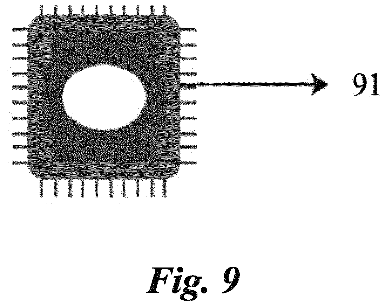

Referring to FIG. 9, the three-dimensional sorting method shown in FIG. 1 to FIG. 5 and the corresponding embodiments can also be realized through a computer readable medium 91. Referring to FIG. 9, the computer readable medium stores the computer executable instruction, i.e., the program instruction to be executed by the three-dimensional sorting robot in the method of the present disclosure. The computer or high-speed chip can execute the instruction, so as to execute the three-dimensional sorting method described in the foregoing embodiment.

The readable signal medium can include the data signal propagated in baseband or as a part of the carrier, which carries the readable program code therein. The data signal can be propagated by multiple forms, which includes, but is not limited to, electromagnetic signal, optical signal or any suitable combination of the foregoing. The readable signal medium can also be any readable medium besides the readable storage medium. The readable medium can send, propagate or transmit the program, which is configured to be used by, or used in combination with the instruction execution system, device or component.

The program code included in the readable medium can be transmitted by any suitable medium, which includes, but is not limited to, wireless medium, wired medium, optical cable and radio frequency (RF), etc., or any suitable combination of the foregoing.

The program code for executing the operation of the present disclosure can be written by any combination of one or more programming languages, wherein the programming languages include the object-oriented programming languages, such as Java, C++, etc., and also include the conventional procedural programming languages, such as the "C" language or the similar programming languages. The program code can be executed totally on the user computing device, executed partially on the user device, executed as an independent software package, executed partially on the user computing device and partially on a remote computing device, or executed totally on the remote computing device or the server. In the case of the remote computing device, the remote computing device can be connected to the user computing device by any type of network, including the local area network (LAN) or the wide area network (WAN), or can be connected to the external computing device (e.g., connected through the Internet by utilizing an Internet service provider).

The program product can be consisted of any combination of one or more readable media. The readable medium can be the readable signal medium or the readable storage medium. The readable storage medium can be, but is not limited to, e.g., a system, control device or component of electricity, magnetism, optics, electromagnetism, infrared ray or semiconductor, or any combination of the above. The more specific examples of readable storage media (a non-exhaustive list) include: an electrical connection with one or more wires, portable disk, hard disk, random access memory (RAM), read-only memory (ROM), erasable programmable read-only memory (EPROM or flash memory), optical fiber, portable compact disk read-only memory (CD-ROM), optical storage component, magnetic storage component, or any suitable combination of the above.

The program product for system privilege opening of the embodiments of the present disclosure can adopt the portable CD-ROM and the program code thereon, which can run on the computing device. However, the program product of the present disclosure is not limited thereto. In the present disclosure, the readable storage medium can be any tangible medium including or storing the program, which can be used by or in combination with the instruction execution system, control device or component.

The present disclosure is described with reference to the method, and device (system) in the embodiments of the present disclosure, and the flow diagrams and/or block diagrams of the computer program products. It is to be understood that the computer program instruction can realize each process and/or block of the flow diagrams and/or block diagrams, and combinations of the processes and/or blocks in the blocks and the flow diagrams and/or block diagrams. The computer program instructions can be provided to a general-purpose computer, a special-purpose computer, an embedded processor or a processor of other programmable data processing device to produce a machine, so that the instructions executed by the computer or the processor of other programmable data processing device produce a device, which is configured to realize the specified functions one or more processes in the flow diagrams and/or one or more blocks in the block diagrams.

The computer program instructions can also be stored in a computer-readable memory that can direct the computer or other programmable data processing device to run in a particular method, so that the instructions stored in the computer-readable memory produce the product including the instruction device, wherein the instruction device realizes the specified function of one or more processes in the flow diagrams and/or one or more blocks in the block diagrams.

The computer program instructions can also be loaded into the computer or the other programmable data processing device, so that the computer or the other programmable device executes a series of operational steps to realize the function by the computer, so that the instructions executed by the computer or the other programmable device provide the steps, which are configured to realize the specified function in one or more processes in the flow diagrams and/or one or more block in the block diagrams.

The preferred embodiments of the present disclosure are described above, but those skilled in the art can make other changes and modifications for the embodiments once the primary inventive concepts are known. Therefore, the appended claims are intended to include the preferred embodiments and all changes and modifications falling within the scope of the present disclosure.

Obviously, those skilled in the art can make various changes and variations for the present disclosure without departing from the spirit and scope of the present disclosure. Therefore, if the changes and variations of the present disclosure fall within the scope of the claims of the present disclosure and the equivalent technologies thereof, the present disclosure is intended to include these changes and variations as well.

### Industrial Applicability

The present disclosure discloses a three-dimensional sorting method, three-dimensional sorting robot and system, wherein the method includes: an acquiring step, including acquiring identity information of a target sorting shelf, wherein the identity information can include: structure data of the sorting shelf and/or positional information of a basket unit in the shelf; a binding step, including binding the identity information of the target sorting shelf to information of the three-dimensional sorting robot, wherein the binding relationship is associated through a target order of a server; and a sorting step, including sorting goods to be sorted according to the identity information of the shelf under a sorting task of the target order. In the three-dimensional sorting system, in case of different baskets or sorting shelves, or sorting shelves with complex structure or messy, the sorting can be accomplished by the sorting control method of recognizing the information of different baskets or sorting shelves, so as to realize the three-dimensional sorting without limiting the baskets or sorting shelves.

Furthermore, it can be understood that, the three-dimensional sorting method, three-dimensional sorting robot and system of the present disclosure are reproducible and can be used in multiple types of industrial applications. For example, the three-dimensional sorting method, three-dimensional sorting robot and system of the present disclosure can be used in the technical field of the sorting robot.

## Claims

1. A three-dimensional sorting method, **characterized in that** the three-dimensional sorting method comprises:
an acquiring step, comprising acquiring identity information of a target sorting shelf, wherein the identity information comprises: structure data of the sorting shelf and/or positional information of a basket unit in the sorting shelf;
a binding step, comprising binding the identity information of the target sorting shelf to information of the three-dimensional sorting robot, wherein the binding relationship is associated through a target order of a server; and
a sorting step, comprising sorting goods to be sorted according to the identity information of the shelf under a sorting task of the target order.

2. The three-dimensional sorting method according to claim 1, further comprising:
acquiring attribute data of the basket unit of the sorting shelf, wherein the attribute data comprise: one or a combination of more of dimensional data, volumetric data and type data; and
matching the goods to be sorted in the target order according to the attribute data, and generating a correspondence relationship table of the goods to be sorted and the basket unit.

3. The three-dimensional sorting method according to claim 1 or 2, wherein the acquiring step further comprises:
acquiring the identity information through reading a label provided on the target sorting shelf by RFID, wherein the label carries structure data of the sorting shelf and/or positional information of the basket unit, wherein
the structure data of the sorting shelf refer to a longitudinal and transversal structure of the sorting shelf and positional information of an available basket unit; and
the positional information of the basket unit refers to a position of the basket unit in a coordinate system composed of the sorting shelf.

4. The three-dimensional sorting method according to claim 3, wherein the step of sorting goods to be sorted according to the identity information of the shelf under a sorting task of the target order comprises:
parsing sorting information of the goods to be sorted, wherein the sorting information carries a correspondence relationship with a certain basket unit in the sorting shelf;
looking up the correspondence relationship table, and acquiring a coordinate value of the basket unit in a three-dimensional coordinate system composed of the sorting shelf; and
indexing the coordinate value and positioning, and putting the goods to be sorted into the basket unit.

5. The three-dimensional sorting method according to claim 4, further comprising:
querying a sorting shelf number corresponding to current goods to be sorted;
and
preparing to put into the sorting shelf when the sorting shelf number is corresponding to a bound sorting shelf number.

6. The three-dimensional sorting method according to any one of claims 1 to 5, further comprising: an order updating step, comprising
updating a current order condition to be completed when all goods of the target order are put; and
releasing a binding relationship of a current shelf and the sorting robot.

7. The three-dimensional sorting method according to claim 6, wherein a plurality of sorting robots are provided; and during a period of executing the target order, the binding relationship of the three-dimensional sorting robot and the target sorting shelf is sole.

8. A three-dimensional sorting robot, **characterized in that** the three-dimensional sorting robot comprises:
an acquiring unit, configured to acquire identity information of a target sorting shelf, wherein the identity information comprises: structure data of the sorting shelf and/or positional information of a basket unit in the sorting shelf;
a binding unit, configured to bind the identity information of the target sorting shelf to information of the three-dimensional sorting robot, wherein the binding relationship is associated through a target order of a server; and
a sorting unit, configured to sort goods to be sorted according to the identity information of the shelf under a sorting task of the target order.

9. The three-dimensional sorting robot according to claim 8, wherein the acquiring unit is further configured for:
acquiring attribute data of the basket unit of the sorting shelf, wherein the attribute data comprise: one or a combination of more of dimensional data, volumetric data and type data; and
matching the goods to be sorted in the target order according to the attribute data, and generating a correspondence relationship table of the goods to be sorted and the basket unit.

10. The three-dimensional sorting robot according to claim 8 or 9, wherein the acquiring unit is realized by a RFID reader in a following way:
acquiring the identity information through reading a label provided on the target sorting shelf, wherein the label carries the structure data of the sorting shelf and/or the positional information of the basket unit, wherein
the structure data of the sorting shelf refer to a longitudinal and transversal structure of the sorting shelf and positional information of an available basket unit; and
the positional information of the basket unit refers to a position of the basket unit in a coordinate system composed of the sorting shelf.

11. The three-dimensional sorting robot according to any one of claims 8 to 10, wherein the sorting unit is further configured for:
parsing sorting information of the goods to be sorted, wherein the sorting information carries a correspondence relationship with a certain basket unit in the sorting shelf;
looking up the correspondence relationship table, and acquiring a coordinate value of the basket unit in a three-dimensional coordinate system composed of the sorting shelf; and
indexing the coordinate value and positioning, and putting the goods to be sorted into the basket unit.

12. The three-dimensional sorting robot according to any one of claims 8 to 11, wherein a plurality of three-dimensional sorting robots are provided; and during a period of executing the target order by the sorting unit, the binding relationship of the three-dimensional sorting robot and the sorting shelf is sole.

13. A three-dimensional sorting system, **characterized in that** the three-dimensional sorting system comprises: a three-dimensional sorting robot, a server and a sorting shelf, wherein the three-dimensional sorting robot executes following steps:
an acquiring step, comprising acquiring identity information of a target sorting shelf, wherein the identity information comprises: structure data of the sorting shelf and/or positional information of a basket unit in the shelf;
a binding step, comprising binding the identity information of the target sorting shelf to information of the sorting robot, wherein the binding relationship is associated with a target order through executing by the server; and
a sorting step, comprising sorting goods to be sorted according to the identity information of the shelf under a sorting task of the target order.

14. The three-dimensional sorting system according to claim 13, wherein the sorting robot executes the acquiring step in a following way:
acquiring the identity information through reading a label provided on the target sorting shelf by RFID, wherein the label carries structure data of the sorting shelf and/or positional information of the basket unit, wherein the structure data of the sorting shelf refer to a longitudinal and transversal structure of the sorting shelf and positional information of an available basket unit; and
the positional information of the basket unit refers to a position of the basket unit in a coordinate system composed of the sorting shelf.

15. The three-dimensional sorting system according to claim 13 or 14, wherein the sorting robot executes the sorting step in a following way:
parsing sorting information of the goods to be sorted, wherein the sorting information carries a correspondence relationship with a certain basket unit in the sorting shelf;
looking up the correspondence relationship table, and acquiring a coordinate value of the basket unit in a three-dimensional coordinate system composed of the sorting shelf; and
indexing the coordinate value and positioning, and putting the goods to be sorted into the basket unit.

16. The three-dimensional sorting system according to any one of claims 13 to 15, wherein the sorting robot executes the sorting step in a following way:
parsing sorting information of the goods to be sorted, wherein the sorting information carries a correspondence relationship with a certain basket unit in the sorting shelf;
looking up the correspondence relationship table, and acquiring a coordinate value of the basket unit in a three-dimensional coordinate system composed of the sorting shelf; and
indexing the coordinate value and positioning, and putting the goods to be sorted into the basket unit.

17. The three-dimensional sorting system according to any one of claims 13 to 16, wherein the server executes releasing and order updating steps:
updating a current order condition to be completed when all goods of the target order are put; and
releasing a binding relationship of a current shelf and the sorting robot.

18. A computing device, **characterized in that** the computing device comprises:
at least one processor; and
a memory communicatively connected to the at least one processor,
wherein the memory stores an instruction which can be executed by the at least one processor, so that the at least one processor can execute the method according to any one of claims 1 to 7.
